# EUROPÄISCHE PATENTSCHRIFT

(11) **EP 0 589 526 B1**
(45) Veröffentlichungstag und Bekanntmachung des Hinweises auf die Patenterteilung: **05.06.2002**
(21) Anmeldenummer: 93202703.0
(22) Anmeldetag: 17.09.1993
(51) Int. Cl.: H04Q 11/04, H04M 11/06

(54) **Dienstintegriertes Digitalnetz (ISDN) und Station für ein dienstintegriertes Digitalnetz**
Integrated Services Digital Network (ISDN) and ISDN - terminal
Réseau Numérique à Intégration des Services (RNIS) et terminal RNI

(30) Priorität: 25.09.1992 DE 4232091
(43) Veröffentlichungstag der Anmeldung: 30.03.1994
(73) Patentinhaber: Philips Corporate Intellectual Property GmbH, 52064 Aachen (DE); Koninklijke Philips Electronics N.V., 5621 BA Eindhoven (NL)
(72) Erfinder: Gantner, Lothar, D-20097 Hamburg (DE); Göldenitz, Joachim, D-20097 Hamburg (DE); Häussler, Rolf, D-20097 Hamburg (DE); Danzer, Werner, D-20097 Hamburg (DE)
(74) Vertreter: Volmer, Georg, Dipl.-Ing.

(56) Entgegenhaltungen:
- US-A- 4 985 887
- US-A- 5 043 983
- PATENT ABSTRACTS OF JAPAN vol. 014, no. 421 (E-0976), 11.September 1990 & JP 02 162867 A (RICOH CO. LTD), 22.Juni 1990,
- PATENT ABSTRACTS OF JAPAN vol. 016, no. 312 (E-1230), 9.Juli 1992 & JP 04 086144 A (MITSUBISHI ELECTRIC CORP.), 18.März 1992,
- PATENT ABSTRACTS OF JAPAN vol. 014, no. 564 (E-1013), 14.Dezember 1990 & JP 02 244864 A (FUJITSU LTD), 28.September 1990,
- PATENT ABSTRACTS OF JAPAN vol. 016, no. 360 (E-1243), 4.August 1992 & JP 04 113759 A (MATSUSHITA ELECTRIC IND. CO. LTD), 15.April 1992,
- PATENT ABSTRACTS OF JAPAN vol. 015, no. 295 (E-1094), 26.Juli 1991 & JP 03 104461 A (FUJITSU LTD), 1.Mai 1991,
- PATENT ABSTRACTS OF JAPAN vol. 016, no. 326 (E-1235), 16.Juli 1992 & JP 04 096555 A (NEC CORP.), 27.März 1992,

## Beschreibung

Die Erfindung bezieht sich auf ein dienstintegriertes Digitalnetz (ISDN) und eine Station für ein dienstintegriertes Digitalnetz mit einer Eingabevorrichtung zur Zuführung einer Nachricht und einer Stations-Steuerschaltung.

Im dienstintegrierten digitalen Netz werden die digitalen Nachrichten (z.B. Sprache, Text, Bild) in einen 64 kbit/s-Kanal (B-Kanal) transportiert. Ein solcher B-Kanal wird dabei von einem Endgerät zum anderen Endgerät durchgehend vermittelt. Für einen Teilnehmeranschluß (Basisanschluß) stehen zwei B-Kanäle und ein D-Kanal (16 kbit/s) für Signalisierungsinformationen zur Verfügung. Über den D-Kanal werden die Signalisierungsprozeduren nach einem einheitlichen Standard abgewickelt. Signalisierungsinformationen werden dabei in Schicht-3-Pakete eingefügt. Ein solches Schicht-3-Paket weist ein Kopffeld mit einer Protokollkennung, einer Referenzverwaltung und einem Nachrichtentyp auf und die eigentliche Nutzinformation in dem Nutzinformationsfeld. Beispielsweise wird ein SETUP-Befehl zum Aufbau einer Verbindung in dem Schicht-3-Paket übertragen.

Ferner gibt es noch die Möglichkeit, eine Teilnehmervorrichtung, beispielsweise eine Nebenstellenanlage mit mehreren angeschlossenen Endgeräten, an einen Primärmultiplexanschluß anzuschließen. Der Primärmultiplexanschluß stellt dreißig Nutzkanäle mit 64 kbit/s, einen Signalisierungskanal und einen Synchronisationskanal zur Verfügung. Die Kopplung zwischen einem Nutzkanal des Primärmultiplexanschlusses und einem Endgerät der Teilnehmervorrichtung stellt eine in der Teilnehmervorrichtung enthaltene Vermittlungsstelle her.

Für Informationszwecke, z.B. über Rufnummern, ist in dem dienstintegrierten Digitalnetz auch eine Auskunftsvorrichtung vorhanden. Diese Auskunftsvorrichtung enthält eine Vermittlungsstelle, mehrere an die Vermittlungsstelle angeschlossene Endgeräte und eine Informationsverarbeitungsschaltung, die der Vermittlungsstelle beispielsweise Rufnummern liefert.

Als Station ist unter anderem ein einzelnes Endgerät, eine Teilnehmervorrichtung und eine Auskunftsvorrichtung zu verstehen.

Ein ISDN-Endgerät enthält einen Hörer und ein Mikrofon jeweils mit Bandfilter und Analog-Digital-Umsetzer bzw. Digital-Analog-Umsetzer zum Anschluß an einen B-Kanal. Der andere B-Kanal kann für Datenübertragung z.B. über eine serielle oder parallele Datenschnittstelle verwendet werden. Des weiteren ist eine Endgeräte-Steuerschaltung (z. B. Mikroprozessor) vorhanden, die Signalisierungsinformationen in den D-Kanal eingibt, die Signale zu einer Anzeigenvorrichtung sendet und die Signale von einer Eingabevorrichtung erhält. Ein Multiplexer/Demultiplexer trennt bzw. fügt die beiden B-Kanäle und den D-Kanal zusammen.

Zur Übertragung von Nachrichten, wie z.B. einer Rufnummer, kann der Teilnehmer die kostenpflichtige ISDN-Dienstleistung "User to user signalling service" während eines Gesprächs in Anspruch nehmen (vgl. z.B.: "Grundlagen der Vermittlungstechnik" von Gerd Siegmund, v. Decker Verlag, Heidelberg, 1991, Seiten 213 bis 232). Hierbei wird in ein Schicht-3-Paket zur Informationübertragung eine Nachricht eingegeben.

Das Dokument JP-A-02 162 867 beschreibt ein ISDN-Terminal, welches einen Anruf von einem anderen (anrufenden) ISDN-Terminal erhält und eine Empfangsoperation nicht ausführen kann. Das ISDN-Terminal sendet mittels einer "REL COM"-Nachricht die ISDN-Nummer als "User-To-User"-Information an das anrufende Terminal zurück. Anschließend versucht das andere (anrufende) Terminal wieder eine Verbindung mittels der in der "User-To-User"-Information enthaltenen ISDN-Nummer aufzubauen. Hieraus ist also bekannt, durch Rückführung der ISDN-Nummer einen erneuten Verbindungsaufbau mit einem ISDN-Terminal zu starten. Das Dokument zeigt also eine Nachrichten- bzw. Rufnummernübertragung mittels einer Signalisierungsnachricht beim Auslösevorgang ohne Inanspruchnahme eines zusätzlichen ISDN-Merkmals.

Das Dokument US-A-5 043 983 beschreibt eine Vorrichtung, welche der Übermittlung der Gebühreninformation eines gerade beendeten Gesprächs mittels eines "user-to-user information elements" in einer SETUP-Nachricht von einem "operator assistance system" zu einem Endgerät beschreibt.

Aus dem Dokument "ISDN - Das dienstintegrierte digitale Nachrichtennetz", Peter Bocker, Springer-Verlag, Heidelberg 1986, S. 95 und 96, ist zu entnehmen, dass Signalisierungsnachrichten (z.B. SETUP, CONNECT) zusätzliche Informationen-enthalten können, die vom Netz nicht interpretiert werden.

Der Erfindung liegt die Aufgabe zugrunde, eine Station für ein dienstintegriertes Digitalnetz zu schaffen, mit dem die übertragung einer der Station frei zuführbaren Rufnummer am Ende eines Gesprächs auf einfache Art, ohne Inanspruchnahme eines zusätzlichen ISDN-Merkmals möglich ist.

Die Aufgabe wird durch eine Station der eingangs genannten Art dadurch gelöst, daß die Stations-Steuerschaltung beim Auslösevorgang zur Einfügung einer von der Eingabevorrichtung zugeführten Rufnummer in eine Auslöseinformation und zur Sendung der Auslöseinformation vorgesehen ist und daß die Stations-Steuerschaltung nach Empfang einer Auslöseinformation von einer anderen Station zur Entnahme der in der Auslöseinformation enthaltenen Rufnummer und zur Speicherung der empfangenen Rufnummer in einer in der Station enthaltenen Speicheranordnung vorgesehen ist.

Der erfindungsgemäßen Station wird über eine Eingabevorrichtung eine Nachricht, z.B. eine Rufnummer, Lottozahlen, Wetterbericht etc., zugeführt. Diese Rufnummer kann beispielsweise von einem Teilnehmer über eine Tastatur eingegeben werden. Eine solche Tastatur stellt eine Eingabevorrichtung dar. Die Nachricht kann auch z.B. von einem Speicher über eine Schnittstelle der Station zugeführt werden. Wenn ein Gespräch beendet wird, beginnt ein Auslösevorgang. Hierzu wird von der auslösenden Station eine Auslöseinformation gebildet, welche die eingegebene Nachricht enthält. Anschließend wird die Auslöseinformation beispielsweise an eine Vermittlungsstelle gesendet. Von dieser Vermittlungsstelle wird die Auslöseinformation an eine andere Station gesendet und dort ausgewertet.

Die Übertragung der Nachricht erfolgt bei der Erfindung über eine beim Auslösevorgang sowieso notwendige Auslöseinformation. Es muß also nicht eine besondere Information zur Übertragung der Nachricht zur Verfügung gestellt werden. Für die Erfindung ist also kein zusätzliches ISDN-Merkmal erforderlich.

In einer Weiterbildung der Erfindung ist die Station als Endgerät und die Stations-Steuerschaltung als Endgeräte-

Steuerschaltung ausgebildet. Die Endgeräte-Steuerschaltung ist beim Auslösevorgang zur Einfügung der zugeführten Nachricht in ein Schicht-3-Paket mit der Information über den Auslösevorgang und zur Sendung des Schicht-3-Pakets über einen D-Kanal zu wenigstens einer digitalen Vermittlungsstelle vorgesehen.

Nach der Eingabe der Nachricht bildet das auslösende Endgerät ein Schicht-3-Paket vom Nachrichtentyp DISCONNECT (DISC) zur Sendung an die Vermittlungsstelle. In dem Nutzinformationsfeld des Schicht-3-Pakets wird die Nachricht von der Endgeräte-Steuerschaltung eingefügt. Das Schicht-3-Paket wird anschließend über den D-Kanal zur Vermittlungsstelle gesendet. In der Vermittlungstelle wird das Schicht-3-Paket umgesetzt und die Auslöseinformation mit der Nachricht über einen zentralen Zeichenkanal zur Vermittlungsstelle des anderen Endgeräts übertragen. In dieser Vermittlungsstelle wird das Schicht-3-Paket mit der Information über den Auslösevorgang und der Nachricht mit an das Endgerät des anderen Teilnehmers gesendet und dort ausgewertet.

Wenn die Station als Teilnehmervorrichtung ausgebildet ist, kann entweder eine in der Teilnehmervorrichtung enthaltene Vermittlungsvorrichtung oder wenigstens ein mit der Vermittlungsvorrichtung gekoppeltes Endgerät den Auslösevorgang durchführen. Wenn das Endgerät den Auslösevorgang übernimmt, ist eine als Stations-Steuerschaltung ausgebildete Endgeräte-Steuerschaltung beim Auslösevorgang zur Einfügung der zugeführten Nachricht in ein Schicht-3-Paket mit der Information über den Auslösevorgang und zur Sendung des Schicht-3-Pakets zu der Vermittlungsvorrichtung vorgesehen, die das Schicht-3-Paket über einen D-Kanal zu wenigstens einer Vermittlungsstelle weiterleitet. Diese Vermittlungsvorrichtung ist Bestandteil der Teilnehmervorrichtung. Die Vermittlungsstelle sendet die vom Schicht-3-Paket empfangene Information über den Auslösevorgang nach einer Umsetzung über den zentralen Zeichenkanal zu einer anderen Vermittlungsstelle.

Die Endgeräte-Steuerschaltung ist nach Empfang eines Schicht-3-Pakets mit der Information über einen Auslösevorgang noch zur Auswertung der in dem Schicht-3-Paket enthaltenen Nachricht vorgesehen. Bei einem Schicht-3-Paket für den Auslösevorgang überprüft die Auswerteschaltung, ob dieses eine Nachricht, z.B. eine Rufnummer, als Nutzinformation enthält. Findet die Endgeräte-Steuerschaltung eine solche Rufnummer, leitet sie diese z.B. an eine Anzeigevorrichtung (z.B. LCD-Display) weiter, welche die Rufnummer dann anzeigt.

Weiter kann die Endgeräte-Steuerschaltung zur Speicherung der empfangenen Nachricht in einer ersten Speicheranordnung vorgesehen sein. Durch eine Bedienfunktion eines Teilnehmers oder direkt nach Auswertung des Schicht-3-Pakets wird die empfangene Nachricht, z.B. eine Rufnummer, von der Endgeräte-Steuerschaltung in einer ersten Speicheranordnung abgelegt.

Das Endgerät kann auch so ausgebildet werden, daß die Endgeräte-Steuerschaltung zur Durchführung eines Wählvorgangs nach Empfang der in der Nachricht enthaltenen Rufnummer vorgesehen ist. Durch eine Bedienfunktion des Teilnehmers oder direkt nach Auswertung des Schicht-3-Pakets wird die Rufnummer von der Endgeräte-Steuerschaltung gewählt.

Die Auswertung der Auslöseinformation kann auch von einer ersten, als Stations-Steuerschaltung ausgebildeten Vermittlungsstellen-Steuerschaltung in der Vermittlungsstelle einer Teilnehmervorrichtung nach deren Empfang vorgenommen werden. Die erste Vermittlungsstellen-Steuerschaltung kann dann die empfangene Nachricht in einer zweiten Speicheranordnung der Vermittlungsstelle ablegen.

Wenn die zweite Speicheranordnung zur Speicherung mindestens einer in der Nachricht enthaltenen Rufnummer dient, ist in einer Fortbildung der Erfindung vorgesehen, daß eine Endgeräte-Steuerschaltung eines mit der Teilnehmervorrichtung gekoppelten Endgeräts einen Wählbefehls zur ersten Vermittlungsstellen-Steuerschaltung zuführt und die erste Vermittlungsstellen-Steuerschaltung anhand einer in der zweiten Speicheranordnung abgelegten Rufnummer einen Wählvorgang durchführt. Hierbei kann durch eine Tastenbetätigung eines Teilnehmers an dem Endgerät der Wählbefehl erzeugt werden und dieser z.B. über den D-Kanal der Vermittlungsstellen-Steuerschaltung übermittelt werden.

Ausführungsbeispiele der Erfindung werden nachstehend anhand der Figuren näher erläutert. Es zeigen:
- Fig. 1: einen Teil eines dienstintegrierten Digitalnetzes mit zwei Stationen und den Stationen zugeordneten Vermittlungsstellen,
- Fig. 2: ein Blockschaltbild einer in der Fig. 1 verwendbaren als Endgerät ausgebildeten Station für ein dienstintegriertes Digitalnetz,
- Fig. 3: ein Blockschaltbild einer in der Fig. 1 verwendbaren als Teilnehmervorrichtung ausgebildeten Station für ein dienstintegriertes Digitalnetz,
- Fig. 4: einen Teil eines dienstintegrierten Digitalnetzes mit einer als Auskunftsvorrichtung ausgebildeten Station und einer weiteren Station mit zugehöriger Vermittlungsstelle,
- Fig. 5: ein Endgerät und die zugehörige Vermittlungsstelle mit einem angeschlossenen Sprachausgabebaustein und
- Fig. 6: einen Teil eines dienstintegrierten Digitalnetzes mit zwei Endgeräten und zugeordneten Vermittlungsstellen.

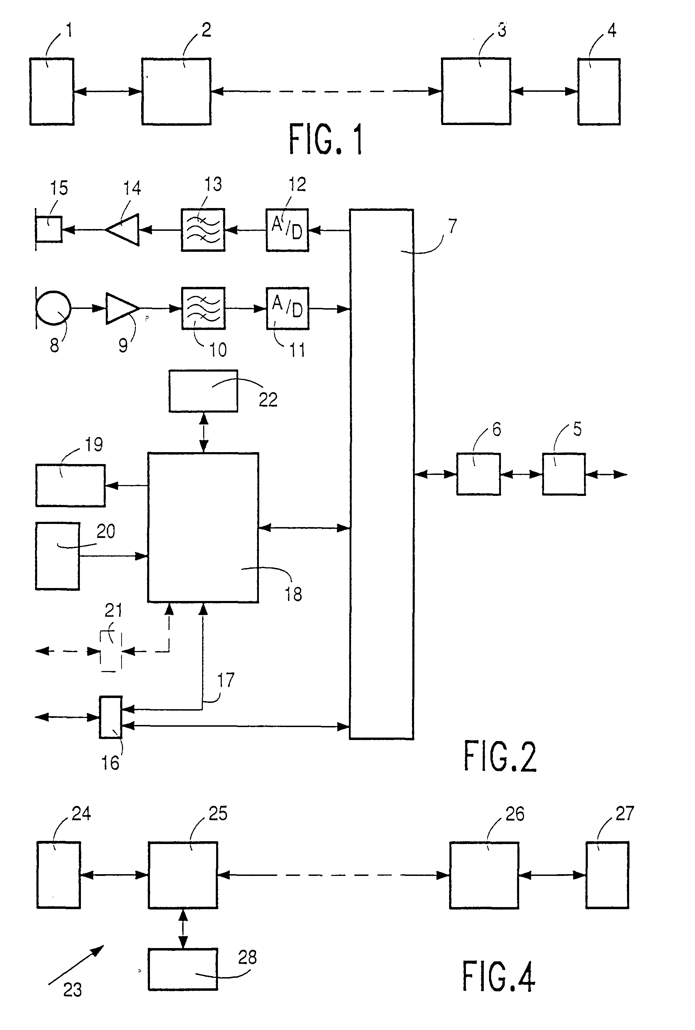

Der in Fig. 1 dargestellte Ausschnitt aus einem dienstintegrierten Digitalnetz (ISDN) enthält eine Station 1 und eine mit dieser Station 1 gekoppelte Vermittlungsstelle 2. Über eventuell weitere Vermittlungsstellen ist eine Vermittlungsstelle 3 mit der Vermittlungsstelle 2 gekoppelt. Der Vermittlungsstelle 3 ist eine Station 4 zugeordnet.

Eine Station 1 oder 4 kann ein Engerät sein. Ein Blockschaltbild eines Endgerätes 1 oder 4 ist in der Fig. 2 gezeigt. Das Endgerät 1 oder 4 ist über einen Basisanschluß mit einer Vermittlungsstelle 2 oder 3 gekoppelt. Über den Basisanschluß kann auf zwei B-Kanäle für digitale Nachrichten und einen D-Kanal für Signalisierungsinformationen zugegriffen werden.

Das an den Basisanschluß angeschlossene Endgerät weist zwei Schaltungen 5 und 6 zur Leitungsanpassung und Richtungstrennung auf. Die Schaltung 6 ist mit einem Demultiplexer/Multiplexer 7 gekoppelt, der entweder die verschiedenen Kanäle trennt oder die Kanäle zusammenfügt. über einen ersten B-Kanal werden die Sprachsignale von dem Mikrofon 8 des Teilnehmers über einen Verstärker 9, einem Bandfilter 10 und einem Analog-Digital-Umsetzer 11 zu dem Demultiplexer/Multiplexer 7 geführt. Des weiteren liefert der Demultiplexer/Multiplexer 7 einem Digital-Analog-Umsetzer 12 Sprachsignale, die über ein Bandfilter 13 und einen Verstärker 14 zu einem Hörer 15 gegeben werden. Über den anderen B-Kanal können Daten zwischen einer Schnittstelle 16 (z. B. V.24-Schnittstelle) und dem Demultiplexer/Multiplexer 7 übertragen werden. Eine Steuerverbindung 17 weist die Schnittstelle 16 noch mit einer Endgeräte-Steuerschaltung 18 auf, die z. B. einen Mikroprozessor enthält.

Die Endgeräte-Steuerschaltung 18 wertet die über den D-Kanal zugeführten Signalisierungsinformationen aus und gibt von ihr erzeugte Siganalisierungsinformationen über den D-Kanal an den Demultiplexer/Multiplexer 7. Die Endgeräte-Steuerschaltung 18 liefert noch Daten an eine Anzeigevorrichtung 19 (z.B. LCD-Display) und bekommt Informationen von einer Eingabevorrichtung, die beispielsweise eine Tastatur 20 sein kann. Als weitere Eingabevorrichtung kann eine gestrichelt dargestellte Schnittstelle 21 vorgesehen sein, die von einer externen Vorrichtung Daten erhält. Daten (Rufnummern), welche die Endgeräte-Steuerschaltung 18 verwaltet, werden in einer ersten Speicheranordnung 22 abgelegt.

Mittels des in Fig. 2 dargestellten Endgerätes kann eine Rufnummernübertragung von einem Teilnehmer A (Station bzw. Endgerät 1) zu einem Teilnehmer B (Station bzw. Endgerät 4) vorgenommen werden. Hierzu wird von dem Teilnehmer A über die Eingabevorrichtung (z.B. Tastatur 20) seines Endgerätes 1 eine Rufnummer eingegeben. Auch kann von der Schnittstelle 21 die Rufnummer geliefert werden. Wenn das Gespräch von dem Teilnehmer A ausgelöst wird (Gesprächsende), wird von der Endgeräte-Steuerschaltung 18 ein Schicht-3-Paket z.B. vom Nachrichtentyp DISCONNECT (DISC) gebildet. Ein solches Schicht-3-Paket weist ein Kopffeld mit einer Protokollkennung, einer Referenzverwaltung und einem Nachrichtentyp auf und dann ein Nutzinformationsfeld. Das Nutzinformationsfeld kann z.B. beim EDSS1-Protokoll (europäisches D-Kanal-Protokoll) einen Auslösegrund (cause) und ein weiteres Feld (diagnostic field) enthalten, welches die Nachricht (z.B. Rufnummer) enthält. Als Auslösegrund kann "cause 22" angegeben werden. Das bedeutet, daß die Nummer sich verändert hat. Die von dem Teilnehmer über die Tastatur 20 oder die Schnittstelle 21 (Eingabevorrichtungen) eingegebene Rufnummer wird dann in das Nutzinformationsfeld des Schicht-3-Pakets eingefügt. Über den D-Kanal wird die in dem Schicht-3-Paket befindliche Auslöseinformation mit der Nachricht (Rufnummer) zur Vermittlungsstelle 2 des Teilnehmers A gegeben. Die Vermittlungsstelle 2 fügt mittels einer nicht näher dargestellten Vermittlungsstellen-Steuerschaltung die Auslöseinformation mit der Rufnummer aus dem Schicht-3-Paket des D-Kanals als Anwendernachricht in eine Nachrichtenzeicheneinheit ein und sendet diese Nachrichtenzeicheneinheit über den zentralen Zeichenkanal zur Vermittlungsstelle 3 des Teilnehmers B. Die Anwendernachricht enthält als ISDN-Nachricht die Nachrichtenart RELEASE MESSAGE (REL), welche den Nachrichtenabbau einleitet, und die Rufnummer als zu übertragende Nachricht beinhaltet. Hierbei wird das Nutzinformationsfeld aus dem Schicht-3-Paket zur Nachrichtenzeicheneinheit übergeben. Die Vermittlungsstelle 3 setzt die Auslöseinformation vom Teilnehmer A in ein Schicht-3-Paket mit dem Nutzinformationstyp DISC um und sendet dieses über den D-Kanal zum Endgerät 4 des Teilnehmers B.

Im Endgerät 4 wird von der Endgeräte-Steuerschaltung 18 geprüft, ob ein Schicht-3-Paket mit einer Auslöseinformation, z.B. ein Schicht-3-Paket mit dem Nachrichtentyp DISC, vorliegt. Ist dies der Fall, wird aus dem Schicht-3-Paket die Rufnummer entnommen und der Anzeigevorrichtung 19 zur Anzeige zugeführt. Der Teilnehmer B kann weiter eine Speicherung der Rufnummer in der Speicheranordnung 22 realisieren, indem er eine Bedienfunktion auf der Tastatur 20 durchführt. Dies kann auch automatisch vorgenommen werden. Er kann auch durch eine weitere Tastenbetätigung erreichen, daß die Endgeräte-Steuerschaltung 18 die empfangene Rufnummer wählt, um einen Verbindungsaufbau mit dem Endgerät der gesuchten Rufnummer aufzubauen. Dieser Vorgang könnte ebenfalls automatisch ablaufen.

Die Rufnummerneinfügung oder -entnahme der Endgeräte-Steuerschaltung 18 des ISDN-Endgerätes 1 oder 4 kann durch folgenden Programmablauf realisiert werden:
Aufruf der Funktion "Auskunft"?
   - Ja:: Eingabevorrichtung zur Eingabe einer Rufnummer freigeben;
   Auflegen des Bedienhörers durch Teilnehmer?
   Ja: Einfügen der vom Teilnehmer eingegebenen Rufnummer in ein Schicht-3-Paket z.B. vom Nachrichtentyp DISC;
   Senden des Schicht-3-Paketes über D-Kanal zur Vermittlungsstelle;
Empfang eines Schicht-3-Pakets z.B. mit dem Nachrichtentyp DISC?
   - Ja:: Enthält das Schicht-3-Paket eine Rufnummer?
   Ja: Entnahme der Rufnummer aus dem Nutzinformationsfeld des Schicht-3-Pakets;
   Anzeigen der Rufnummer auf Anzeigevorrichtung; Funktionsaufruf?
   Aufruf der Funktion "empfangene Rufnummer speichern"?
   Ja: Rufnummer speichern;
   Aufruf der Funktion "empfangene Rufnummer wählen"?
   Ja: Rufnummer wird gewählt;
Wenn der Teilnehmer eine Rufnummer über die Tastatur 20 oder Schnittstelle 21 eingeben möchte, wird die Funktion "Auskunft" aufgerufen. Ist dies erfolgt, wird die Eingabevorrichtung zur Eingabe einer Rufnummer freigegeben. Wird festgestellt, daß der Bedienhörer durch den Teilnehmer aufgelegt worden ist, wird die vom Teilnehmer eingegebene Rufnummer in ein Schicht-3-Paket z.B. vom Nachrichtentyp DISC eingefügt. Danach wird das Schicht-3-Paket auf den D-Kanal gegeben.

Die Endgeräte-Steuerschaltung 18 überprüft des weiteren auch, ob ein Schicht-3-Paket z.B. mit dem Nachrichtentyp DISC auf dem D-Kanal eingetroffen ist. Ist dies der Fall, wird als nächstes überprüft, ob das Schicht-3-Paket eine Rufnummer enthält. Wird dies bestätigt, wird aus dem Nutzinformationsfeld des Schicht-3-Pakets die Rufnummer entnommen und die Rufnummer zur Anzeigevorrichtung gegeben. Dann überwacht die Steuerschaltung 18 noch, ob eine Funktion "empfangene Rufnummer speichern" oder "empfangene Rufnummer wählen" vom Teilnehmer über die Tastatur 20 aufgerufen worden ist. Soll die empfangene Rufnummer gespeichert werden, führt die Steuerschaltung 18 der Speicheranordnung 22 diese zur Speicherung zu. Soll die empfangene Rufnummer gewählt werden, wird ein Verbindungsaufbau von der Endgeräte-Steuerschaltung 18 begonnen (Wählvorgang).

Eine weitere Ausführung einer in Fig. 1 dargestellten Station 1 oder 4 kann die in Fig. 3 gezeigte Teilnehmervorrichtung 32 (privater Teil des dienstintegrierten Netzes) sein, die an einen Primärmultiplexanschluß 33 angeschlossen ist. Über den Primärmultiplexanschluß 33 können bis zu dreißig Nutzkanäle betrieben werden. Zusätzlich ist noch ein Kanal für Signalisierungsinformationen und ein Kanal für Synchronisationsinformationen vorhanden. Eine Vermittlungsstelle 2 oder 3 ist über eine Netzabschlußeinheit 34 und den Primärmultiplexanschluß 33 mit der Teilnehmervorrichtung 32 gekoppelt, die eine Vermittlungsvorrichtung 35 und mehrere Endgeräte 36 enthält. In der Fig. 3 ist aus Gründen der Übersichtlichkeit nur ein Endgerät 36 dargestellt. Die Vermittlungsvorrichtung 35 enthält eine Endgeräteschnittstelle 37, an welche die Engeräte 36 angeschlossen sind, eine Netzschnittstelle 38, die mit der Netzabschlußeinheit 34 verbunden ist, ein Koppelfeld 39, das zwischen Endgeräteschnittstelle 37 und Netzschnittstelle 38 angeordnet ist, und eine erste Vermittlungsstellen-Steuerschaltung 40, die zur Steuerung der Engeräteschnittstelle 37, des Koppelfeldes 39 und der Netzschnittstelle 38 dient. Ferner ist mit der Vermittlungsstellen-Steuerschaltung noch eine zweite Speicheranordnung 41 verbunden.

Bei einem Auslösevorgang kann ein Endgerät 36, wie oben zur Fig. 2 beschrieben, eine Rufnummer in eine Auslöseinformation einfügen. In der Vermittlungsvorrichtung 35 wird das Schicht-3-Paket in den Signalisierungskanal eingefügt und zur Vermittlungsstelle gesendet.

Wird eine Auslöseinformation mit einer Nachricht (z.B. Rufnummer) zur Teilnehmervorrichtung 32 übertragen, so kann diese auf der Anzeigevorrichtung des Endgerätes angezeigt werden oder automatisch bzw. auf Grund einer Tastenbetätigung in einer Speicheranordnung des Endgerätes abgelegt werden. Die Rufnummer kann auch von der Vermittlungsstellen-Steuerschaltung 40 aus der Auslöseinformation entnommen werden und in der Speicheranordnung 41 abgelegt werden. Durch mindestens eine Tastenbetätigung (Wählbefehl über D-Kanal des Endgerätes 36 zur Vermittlungsstellen-Steuerschaltung 40) oder automatisch kann entweder von dem Endgerät 36 oder der Vermittlungsstellen-Steuerschaltung ein Wählvorgang mit der empfangenen Rufnummer gestartet werden.

Die folgenden Ausführungsformen sind nicht Gegenstand der Erfindung, sondern sollen nur das Verständnis der Erfindung erleichtern. Eine weitere Ausführungsform einer Station ist eine Auskunftsvorrichtung 23 (Fig. 4). Hierbei kann das oben beschriebene Endgerät zur Einfügung oder Entnahme einer Rufnummer aus einem Schicht-3-Paket für einen Auslösevorgang auch in der Auskunftsvorrichtung 23 verwendet werden. Eine solche Auskunftsvorrichtung 23 enthält mindestens eine Vermittlungsstelle 25 und ein Endgerät 24 (vgl."Platzansteuerungstechnik für Telefonauskunftstellen" von J. Göldenitz, Unterrichtsblätter F, Jahrgang 42/1989, No. 9, Seiten 287 bis 295). Bisher wird einem Teilnehmer die gesuchte Rufnummer entweder mündlich oder über einen Sprachausgabebaustein mitgeteilt. Nach der Erfindung wird die gesuchte Rufnummer z.B. über die Tastatur 20 eingegeben und in ein Schicht-3-Paket beispielsweise vom Nachrichtentyp DISC über den D-Kanal zur Vermittlungsstelle 25 übertragen und von dort mittels einer zweiten Vermittlungstellen-Steuerschaltung die Auslöseinformation über den zentralen Zeichenkanal zur zweiten, dem Teilnehmer zugeordneten Außen-Vermittlungsstelle 26 übermittelt. Nach Erhalt des Schicht-3-Pakets im Endgerät 27 des Teilnehmers wird die Rufnummer auf der Anzeigevorrichtung 19 des Teilnehmers angezeigt.

Die Rufnummer kann auch von einer Informationsverarbeitungsschaltung 28 (Datenbank) über die erste Vermittlungsstelle 25 zur Endgeräte-Steuerschaltung des Endgerätes 24 über die Schnittstelle 21 geleitet werden. Das Endgerät 24 übermittelt danach die Rufnummer an das Endgerät 27 des Teilnehmers. Desweiteren kann die Rufnummer auch von der Informationsverarbeitungsschaltung 28 zur Vermittlungsstelle 25 gegeben werden und von der darin enthaltenen nicht näher dargestellten Vermittlungsstellen-Steuerschaltung in die Auslöseinformation eingefügt werden. Diese Auslöseinformation kann entweder in einem Schicht-3-Paket von der Vermittlungsstelle 25 zur nächsten, hier nicht näher dargestellten Vermittlungsstelle gesendet werden und dort die in dem Schicht-3-Paket befindliche Auslöseinformation in eine Nachrichtenzeicheneinheit oder direkt in der Vermittlungsstelle 25 in eine Nachrichtenzeicheneinheit eingefügt werden. In dem ersten Fall ist die Vermittlungsstelle 25 mit einem Primärmultiplexanschluß und in dem andereren Fall ein Bestandteil des öffentlichen Teils des dienstintegrierten Nachrichtennetzes.

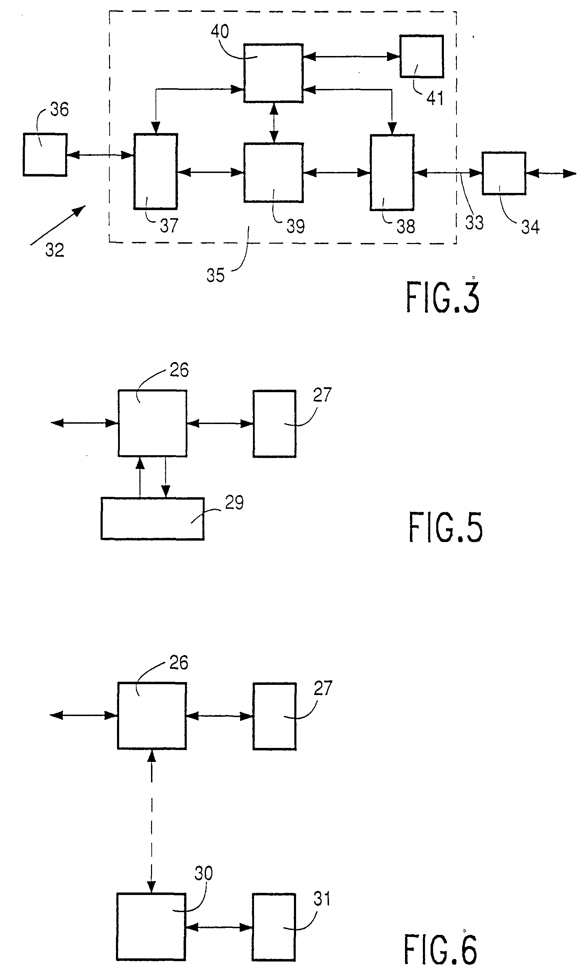

In Fig. 5 ist eine weitere Möglichkeit dargestellt, die von dem Teilnehmer gesuchte Rufnummer zu übermitteln. Die Außen-Vermittlungsstelle 26 ist mit einem Sprachausgabebaustein 29 gekoppelt, dem von einer dritten Vermittlungsstellen-Steuerschaltung der Außen-Vermittlungsstelle 26, die Rufnummer nach Entnahme aus dem Schicht-3-Paket zugeführt wird. Der Sprachausgabebaustein 29 bildet aus der Rufnummer ein Sprachsignal, das über die Außen-Vermittlungsstelle 26 und einen B-Kanal dem Endgerät 27 zugeführt wird. Hierbei ist es nicht erforderlich, daß das Endgerät 27 ein ISDN-Endgerät ist. Die Rufnummer kann auch über einen analogen Kanal dem Endgerät 27 mitgeteilt werden. Damit die Rufnummer in ein Sprachsignal von dem Sprachausgabebaustein 29 umgesetzt werden kann, muß die Auskunftsvorrichtung 23 einen entsprechenden Vermittlungsbefehl an die Vermittlungsstelle 26 senden. Dieser Vermittlungsbefehl wird entweder zusätzlich in die Auslöseinformation eingefügt oder über eine andere Steuerinformation in dem zentralen Zeichenkanal übermittelt.

Ferner kann die Vermittlungsstelle 26 noch, nachdem die Rufnummer übertragen worden ist, den Verbindungsaufbau zu dem Teilnehmer aufbauen, dessen Rufnummer gesucht worden ist. Hierzu erhält sie entweder in der Auslöseinformation (zentraler Zeichenkanal) einen entsprechenden Vermittlungsbefehl oder über eine getrennt zugeführte Steuerinformation und führt anschließend den Verbindungsaufbau bis zur Vermittlungsstelle 30 des gesuchten Teilnehmers durch (vgl. Fig. 6). An der Vermittlungsstelle 30 ist noch das Endgerät 31 des gesuchten Teilnehmers angeschlossen.

## Patentansprüche

1. Station für ein dienstintegriertes Digitalnetz (ISDN) mit einer Eingabevorrichtung (20) zur Zuführung einer Rufnummer und wenigstens einer Stations-Steuerschaltung (18, 40),
**dadurch gekennzeichnet,**
**daß** die Stations-Steuerschaltung (18, 40) beim Auslösevorgang am Gesprächsende zur Einfügung einer von der Eingabevorrichtung (20) zugeführten Rufnummer in eine Auslöseinformation und zur Sendung der Auslöseinformation vorgesehen ist und
**daß** die Stations-Steuerschaltung (18, 40) nach Empfang einer Auslöseinformation von einer anderen Station zur Entnahme der in der Auslöseinformation enthaltenen Rufnummer und zur Speicherung der empfangenen Rufnummer in einer in der Station enthaltenen Speicheranordnung (22,41) vorgesehen ist.

2. Station nach Anspruch 1,
**dadurch gekennzeichnet,**
**daß** die Station als Endgerät und die Stations-Steuerschaltung als Endgeräte-Steuerschaltung (18) ausgebildet ist,
**daß** die Endgeräte-Steuerschaltung (18) beim Auslösevorgang zur Einfügung der zugeführten Rufnummer in ein Schicht-3-Paket mit der Information über den Auslösevorgang und zur Sendung des Schicht-3-Pakets über einen D-Kanal zu wenigstens einer digitalen Vermittlungsstelle (2, 3) vorgesehen ist,
**daß** die Endgeräte-Steuerschaltung (18) nach Empfang eines Schicht-3-Pakets mit der Information über einen Auslösevorgang zur Auswertung der in dem Schicht-3-Paket enthaltenen Rufnummer vorgesehen ist und
**daß** die Endgeräte-Steuerschaltung (18) zur Weiterleitung der Rufnummer an eine Anzeigevorrichtung (19) und zur Speicherung der empfangenen Rufnummer in einer ersten Speicheranordnung (22) vorgesehen ist.

3. Station nach Anspruch 2,
**dadurch gekennzeichnet,**
**daß** die Endgeräte-Steuerschaltung (18) zur Durchführung eines Wählvorgangs nach Empfang der in dem Schicht-3-Paket enthaltenen Rufnummer vorgesehen ist.

4. Station nach Anspruch 1,
**dadurch gekennzeichnet,**
**daß** die Station als Teilnehmervorrichtung (32) ausgebildet ist, die eine Vermittlungsvorrichtung (35) und mindestens ein Endgerät (36) enthält,
**daß** mit der Vermittlungsvorrichtung (35) mindestens ein Endgerät (36) gekoppelt ist,
**daß** die Stations-Steuerschaltung als Endgeräte-Steuerschaltung ausgebildet ist, die beim Auslösevorgang zur Einfügung der zugeführten Rufnummer in ein Schicht-3-Paket mit der Information über den Auslösevorgang und zur Sendung des Schicht-3-Pakets zu der Vermittlungsvorrichtung (35) vorgesehen ist,
**daß** die Vermittlungsvorrichtung (35) zur Sendung des Schicht-3-Paketes über einen D-Kanal zu wenigstens einer Vermittlungsstelle (2, 3) vorgesehen ist,
**daß** die als Teilnehmervorrichtung (32) dienende Station in der Vermittlungsvorrichtung (35) eine weitere, als erste Vermittlungsstellen-Steuerschaltung (40) ausgebildete Stations-Steuerschaltung enthält,
**daß** die erste Vermittlungsstellen-Steuerschaltung (40) nach Empfang einer Auslöseinformation zur Auswertung der in der Auslöseinformation enthaltenen Rufnummer vorgesehen ist und
**daß** die erste Vermittlungsstellen-Steuerschaltung (40) zur Speicherung der Rufnummer in einer zweiten Speicheranordnung (41) der Vermittlungsvorrichtung (35) vorgesehen ist.

5. Station nach Anspruch 4,
**dadurch gekennzeichnet,**
**daß** eine Endgeräte-Steuerschaltung (18) eines mit der Teilnehmervorrichtung (32) gekoppelten Endgeräts zur Zuführung eines Wählbefehls zur ersten Vermittlungsstellen-Steuerschaltung (40) vorgesehen ist und
**daß** die erste Vermittlungsstellen-Steuerschaltung (40) anhand der in der zweiten Speicheranordnung (41) abgelegten Rufnummer zur Durchführung eines Wählvorgangs vorgesehen ist.

## Claims

1. A station for an integrated services digital network (ISDN), the station comprising a feeding unit (20) for feeding a telephone number and at least a station control circuit (18, 40), **characterized in that** with a disconnect transaction at the end of a call the station control circuit (18, 40) inserts a telephone number supplied by the feeding unit (20) into a disconnect information signal and transmits the disconnect information signal and **in that** the station control circuit after receiving a disconnect information signal from another station takes the message contained in the disconnect information signal and stores the received message in a memory means in the station.

2. A station as claimed in Claim 1, **characterized in that** the station is arranged as a terminal and the station control circuit as a terminal control circuit (18), **in that** with the disconnect transaction the terminal control circuit (18) inserts the message supplied into a layer-3 packet which contains the information about the disconnect transaction and sends the layer-3 packet over a D-channel to at least one digital exchange (2, 3), **in that** the terminal control circuit (18) evaluates the telephone number contained in a layer-3 packet once the layer-3 packet containing the information about the disconnect transaction has been received, and **in that** the terminal control circuit (18) conveys the telephone number to a display device (19) and/or stores the received telephone number in a first memory means (22).

3. A station as claimed in Claim 2, **characterized in that** the terminal control circuit (18) carries out a dialling operation once the telephone number contained in the layer-3 packet has been received.

4. A station as claimed in Claim 1, **characterized in that** the station is arranged as a subscriber unit (32) which comprises an exchange (35) and at least a terminal (36), **in that** at least a terminal (36) is coupled to the exchange (35), **in that** the station control circuit is arranged as a terminal control circuit which inserts the telephone number supplied into a layer-3 packet which contains the information about the disconnect transaction and sends the layer-3 packet to the exchange, **in that** the exchange (35) sends the layer-3 packet over a D-channel to at least one exchange (2,3), **in that** the station acting as a subscriber unit (32) comprises in the exchange (35) a further station control circuit arranged as a first exchange control circuit (40), **in that** the first exchange control circuit (40) evaluates the telephone number contained in a disconnect information signal once the disconnect information signal has been received, and **in that** the first exchange control circuit stores the telephone number in a second memory means (41) of the exchange (35).

5. A station as claimed in Claim 4, **characterized in that** a terminal control circuit (18) of a terminal coupled to the subscriber unit (32) applies a dialling command to the first exchange control circuit (40), and **in that** the first exchange control circuit (40) carries out a dialling operation in response to a telephone number stored in the second memory means (41).

## Revendications

1. Station pour un réseau numérique à intégration de services (RNIS) avec un dispositif d'introduction (20) en vue d'amener un numéro d'appel et au moins un circuit de commande de station (18, 40),
**caractérisée en ce**
**que** le circuit de commande de station (18, 40) est prévu pour la procédure de déclenchement à la fin de la conversion pour l'introduction d'un numéro d'appel amené par le dispositif d'introduction (20) dans une information de déclenchement et pour la transmission de l'information de déclenchement et que le circuit de commande de station (18, 40) est prévu après réception d'une information de déclenchement par une autre station pour le prélèvement du numéro d'appel contenu dans l'information de déclenchement et pour l'enregistrement du numéro d'appel reçu dans un dispositif de mémoire (22, 41) contenu dans la station.

2. Station selon la revendication 1,
**caractérisé en ce**
**que** la station est conçue comme un terminal et le circuit de commande de station comme un circuit de commande de terminaux (18),
**que** le circuit de commande de terminaux (18) est prévu lors de la procédure de déclenchement pour l'introduction du numéro d'appel amené dans un paquet à 3 couches avec l'information sur la procédure de déclenchement et pour la transmission du paquet à 3 couches par l'intermédiaire d'un canal D vers au moins un central numérique (2, 3),
**que** le circuit de commande de terminaux (18) est prévu après réception d'un paquet à 3 couches avec l'information sur une procédure de déclenchement pour l'évaluation du numéro d'appel contenu dans le paquet à 3 couches et
**que** le circuit de commande de terminaux ('18) est prévu pour la transmission du numéro d'appel à un dispositif d'affichage (19) et pour la mémorisation du numéro d'appel reçu dans un premier dispositif de mémoire (22).

3. Station selon la revendication 2,
**caractérisée en ce**
**que** le circuit de commande de terminaux (18) est prévu pour l'exécution d'une procédure de sélection après réception du numéro d'appel contenu dans le paquet à 3 couches.

4. Station selon la revendication 1,
**caractérisée en ce**
**que** la station est conçue comme un dispositif de correspondant (32) qui contient un dispositif de commutation (35) et au moins un terminal (26),
**qu'**au moins un terminal (36) est couplé au dispositif de commutation (35),
**que** le circuit de commande de station est conçu comme un circuit de commande de terminaux qui est prévu lors de la procédure de déclenchement pour l'introduction du numéro d'appel appelé dans un paquet à 3 couches avec l'information sur la procédure de déclenchement et pour la transmission du paquet à 3 couches vers le dispositif de commutation (35);
**que** le dispositif de commutation (35) est prévu pour la transmission du paquet à 3 couches par l'intermédiaire d'un canal D vers au moins un central (2, 3);
**que** la station servant de dispositif de correspondant (32) contient dans le dispositif de commutation (35) un circuit de commande de station supplémentaire conçu comme premier circuit de commande de centraux (40);
**que** le premier circuit de commande de centraux (40) est prévu après réception d'une information de déclenchement pour l'évaluation du numéro d'appel contenu dans l'information de déclenchement et
**que** le premier circuit de commande de centraux (40) est prévu pour l'enregistrement du numéro d'appel dans un deuxième dispositif de mémoire (41) du dispositif de commutation (35).

5. Station selon la revendication 4,
**caractérisée en ce**
**qu'**un circuit de commande de terminaux (18) d'un terminal couplé avec le dispositif correspondant (32) est prévu pour amener un ordre de sélection vers le premier circuit de commande de centraux (40) et
**que** le premier circuit de commande de centraux (40) est prévu pour l'exécution d'une procédure de sélection à l'aide du numéro d'appel enregistré dans le deuxième dispositif de mémoire (41).
